# EUROPÄISCHE PATENTSCHRIFT

(11) **EP 2 316 693 B1**
(45) Veröffentlichungstag und Bekanntmachung des Hinweises auf die Patenterteilung: **27.03.2013**
(21) Anmeldenummer: 10188300.7
(22) Anmeldetag: 21.10.2010
(51) Int. Cl.: B60R 1/08

(54) **Spiegelkopf mit überlappendem Sichtfeld**
Mirror head with overlapping field of view
Tête de miroir dotée d'un champ de vision superposé

(30) Priorität: 29.10.2009 DE 102009046174
(43) Veröffentlichungstag der Anmeldung: 04.05.2011
(73) Patentinhaber: MEKRA Lang GmbH & Co. KG, 90765 Fürth (DE)
(72) Erfinder: Lang, Werner, 91465, Ergersheim (DE); Finkenberger, Elmar, 91587, Adelshofen (DE); Centmayer, Stefan, 91465, Ergersheim (DE)
(74) Vertreter: Winter, Brandl, Fürniss, Hübner, Röss, Kaiser, Polte - Partnerschaft

(56) Entgegenhaltungen:
- DE-A1- 2 537 876
- DE-C1- 4 132 962
- US-A- 3 826 563
- US-A- 4 678 294
- US-A- 5 210 655
- US-A1- 2001 000 443

## Beschreibung

Die Erfindung betrifft einen Spiegelkopf gemäß dem Oberbegriff des Anspruchs 1 sowie einen Außenspiegel mit einem solchen Spiegelkopf gemäß Anspruch 7.

Aufgrund gesetzlicher Anforderungen für die Sichtfelder von Außenspiegeln an Nutzfahrzeugen sind häufig Hauptspiegel und wenigstens ein Zusatzspiegel mit unterschiedlichen Sichtfeldern in einem gemeinsamen Gehäuse angeordnet. Ein solcher Außenspiegel ist beispielsweise aus der EP 1020327 B1 bekannt.

In aller Regel ist zumindest der Hauptspiegel manuell oder motorisch verstellbar. Aufgrund der Verstellbarkeit des Hauptspiegels kann es bei ungünstiger Einstellung des Hauptspiegels dazu kommen, dass sich zwischen dem Sichtfeld des Hauptspiegels und das Sichtfeld des Zusatzspiegels eine durch die beiden Spiegel nicht einsehbare Sichtfeldlücke ergibt. Da beide Spiegel unmittelbar nebeneinander angeordnet sind, geht ein Nutzer implizit davon aus, dass ein Objekt, dass im gemeinsamen Randbereich der beiden Spiegel aus dem Hauptspiegel verschwindet unmittelbar im benachbarten Zusatzspiegel auftaucht und umgekehrt. Dem Nutzer ist in der Regel nicht bewusst, dass aufgrund einer ungünstigen Stellung des Hauptspiegels in Relation zu dem Zusatzspiegel eine nicht einsehbare Sichtfeldlücke zwischen den Sichtfeldern des Hauptspiegels und des Zusatzspiel entstehen kann. Dem Nutzer ist also nicht bewusst, dass unter Umständen ein Hindernis in dieser Sichtfeldlücke für ihn nicht einsehbar ist. Dies gilt umso mehr, wenn zusätzlich auch der Zusatzspiegel motorisch oder manuell verstellbar ist.

Aus der DE-OS 2158258 ist Außenspiegel bekannt, bei dem in einem gemeinsamen Halterahmen zwei Spiegelflächen derart angeordnet sind, dass sich ihre Sichtfelder überlappen. Auch aus der DE 102007013028 B4 und der DE 3931485 A1 sind Außenspiegel mit sich zum Teil überlappenden Sichtfeldern bekannt. Nachteilig hierbei ist es, dass durch die starre Verbindung zwischen den Spiegelflächen mit den überlappenden Sichtfeldern keinerlei Variabilität und Anpassungsfähigkeit gegeben ist.

Die US 4 678 294 A zeigt eine Anordnung von zwei Spiegeln in einem gemeinsamen Spiegelgehäuse, die über Verstelleinrichtungen gemeinsam verstellt werden können. Auch die US 3 826 563 zeigt zwei Spiegel in einem gemeinsamen Gehäuse, wobei lediglich einer der beiden Spiegel verstellt werden kann.

Aus der 41 32 962 C1 ist eine Spiegelanordnung mit zwei Spiegeln - Haupt- und Zusatzspiegel - in einem mehrteiligen Gehäuse bekannt, bei dem die Spiegelscheiben von Haupt- und Zusatzspiegel mit jeweils eigenen Verstelleinrichtungen verstellt werden.

Ausgehend von der US 4 678 294 A ist es Aufgabe der vorliegenden Erfindung einen Spiegelkopf anzugeben, mit dem sich auf einfache Weise unterschiedliche Sichtfelder ohne Sichtfeldlücke dazwischen bereitstellen lassen. Weiter ist es Aufgabe der vorliegenden Erfindung einen Außenspiegel mit einem solchen Spiegelkopf anzugeben.

Die Lösung dieser Aufgaben erfolgt durch die Merkmale der Ansprüche 1 bzw. 9.

Dadurch, dass der Haupt- und der Zusatzspiegel über deren jeweiliges Gehäuse lösbar miteinander verbunden sind, wird zum einen bei Verstellung des Hauptspiegels automatisch der Zusatzspiegel mit verstellt und zusätzlich lassen sich unterschiedliche Haupt- und Zusatzspiegel auf einfache Weise miteinander kombinieren. Es ergibt sich somit ein modulares Spiegelsystem, in dem sich unterschiedliche Zusatzspiegel mit dem Hauptspiegel kombinieren lassen. Das Hauptspiegelgehäuse ist vorzugsweise so ausgestaltet, dass der Hauptspiegel auch ohne daran montierten Zusatzspiegel eingesetzt werden kann. Die Anordnung von Haupt- und Zusatzspiegel in ihrer starren Verbindung ist so gewählt, dass deren Sichtfelder sich überlappen oder unmittelbar aneinander angrenzen. Damit wird verhindert, dass im gemeinsamen Grenzbereich zwischen den beiden Spiegeln eine für den Nutzer nicht einsehbare Sichtfeldlücke entstehen kann.

Die lösbare Verbindung zwischen Haupt- und Zusatzspiegel kann mittels Verschraubung erfolgen - Anspruch 2. Vorzugsweise erfolgt die Verbindung jedoch durch eine lösbare Formschlussverbindung - Anspruch 3 - und insbesondere durch eine Clips-Verbindung - Anspruch 4. Durch die lösbare Formschlussverbindung wird der Austausch des Zusatzspiegels vereinfacht.

Weitere Einzelheiten, Merkmale und Vorteile der Erfindung ergeben sich aus der nachfolgenden Beschreibung bevorzugter Ausführungsformen anhand der Zeichnungen.

Es zeigt:
Fig. 1 eine Aufsicht auf die Spiegelflächen ein ersten Ausführungsform der Erfindung mit einem Hauptspiegel und einem Zusatzspiegel;
Fig. 2 eine Schnittdarstellung entlang der Linie A-A in Fig. 1;
Fig. 3 eine Rückansicht der ersten Ausführungsform;
Fig. 4 eine schematische Darstellung der Sichtfelder von Haupt- und Zusatzspiegel; und
Fig. 5 eine perspektivische Darstellung einerzweiten Ausführungsform der Erfindung;

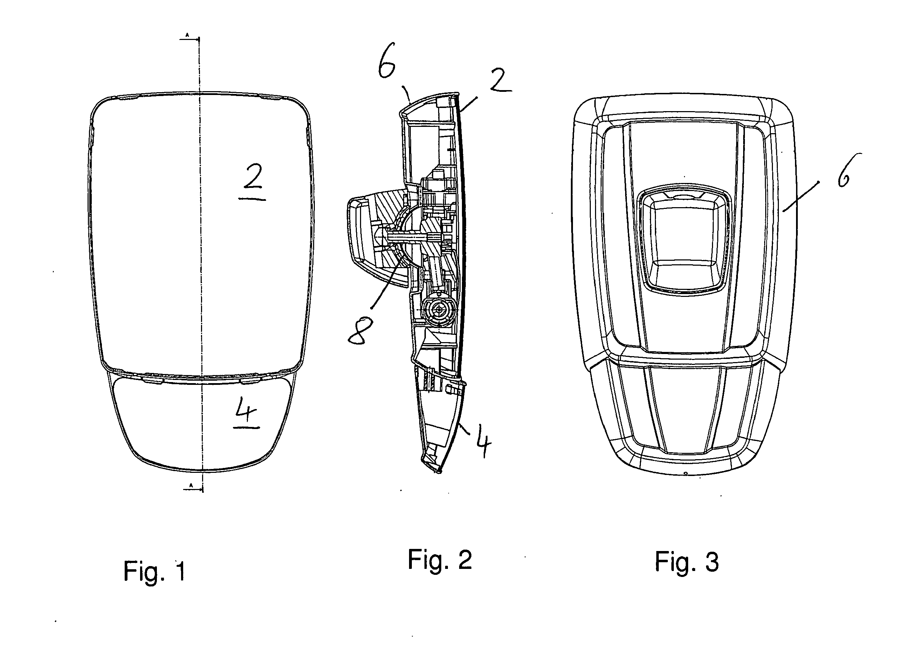

Fig. 1 bis 3 zeigen eine erste Ausführungsform eines erfindungsgemäßen Spiegelkopfes in Form eines Kopfverstellers. Der Spiegelkopf umfasst einen Hauptspiegel 2 mit einer trapezförmigen Hauptspiegelscheibe 1 mit gerundeten Ecken sowie einen Zusatzspiegel 4 mit einer Zusatzspiegelscheibe 3, der sich unmittelbar an eine der schmalen Seiten des Hauptspiegels 2 anschließt. Der Hauptspiegel 2 ist in einem Gehäuse 6 und der Zusatzspiegel 4 in einem Gehäuse 7 angeordnet. Das Hauptspiegelgehäuse 6 ist mittels einer Schraubverbindung 5 starr mit dem Zusatzspiegelgehäuse verbunden. Zusatzspiegelscheibe 3 und Hauptspiegelscheibe 1 sind starr in ihren jeweiligen Gehäusen 6, 7 angeordnet. An das Gehäuse 6 des Hauptspiegels 2 greift eine elektromotorische Verstelleinrichtung 8 an und aufgrund der starren Verbindung zwischen Hauptspiegel 2 und Zusatzspiegel 4 wird bei Betätigung der Verstelleinrichtung 8 immer Hauptspiegel 2 und Zusatzspiegel 4 gemeinsame verstellt.

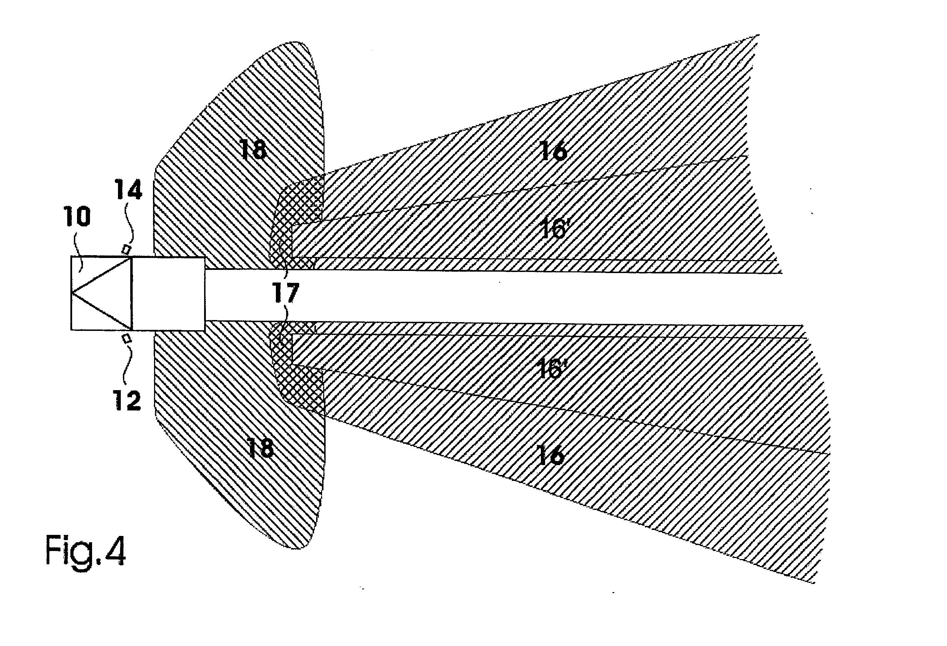

In Fig. 4 ist schematisch in Aufsicht ein Traktor 10 dargestellt, der einen linken Außenspiegel 12 und einen rechten Außenspiegel 14 aufweist, die jeweils mit einem Spiegelkopf gemäß der ersten Ausführungsform der vorliegenden Erfindung versehen sind. Der Hauptspiegel 2 weist ein Hauptspiegelsichtfeld 16 und der Zusatzspiegel 4 weist ein Zusatzspiegelsichtfeld 18 auf. Die Größe und Lage dieser Sichtfelder 16, 18 ist in Fig. 4 dargestellt. 16' bezeichnet das Sichtfeld, das in der Vergangenheit gesetzlich gefordert war, 16 bezeichnet das größere aktuell geforderte Sichtfeld eines Hauptspiegels. Die beiden Spiegel 2, 4 sind so miteinander verschraubt, dass sich die Sichtfelder 16, 18 der beiden Spiegel sich in einem Schnittbereich 17 überlappen, so dass keine uneinsehbare Sichtfeldlücke zwischen den Sichtfeldern 16 und 18 der beiden Spiegel 2, 4 vorliegt.

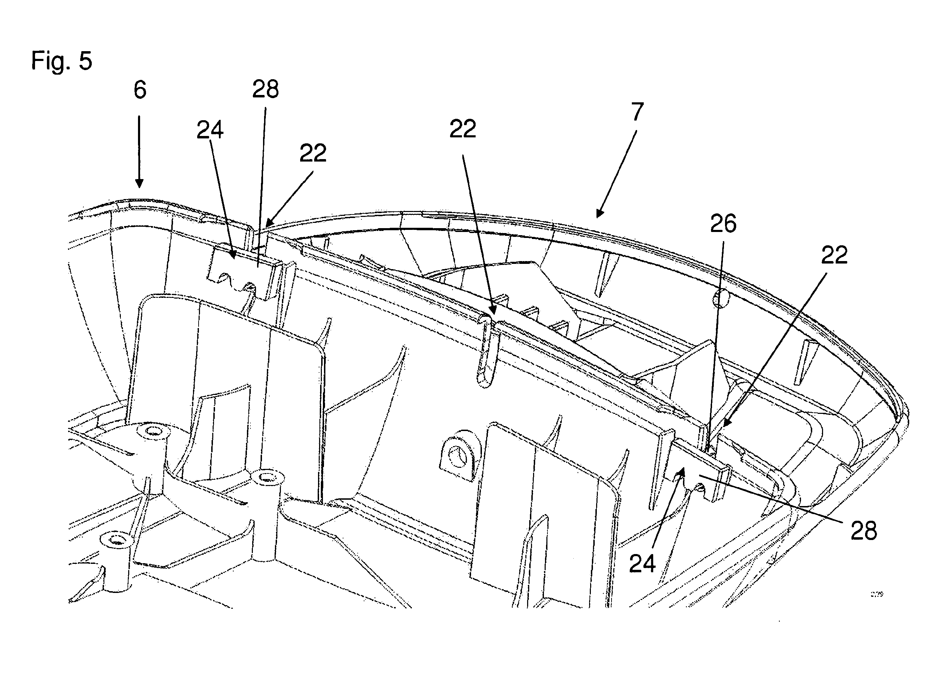

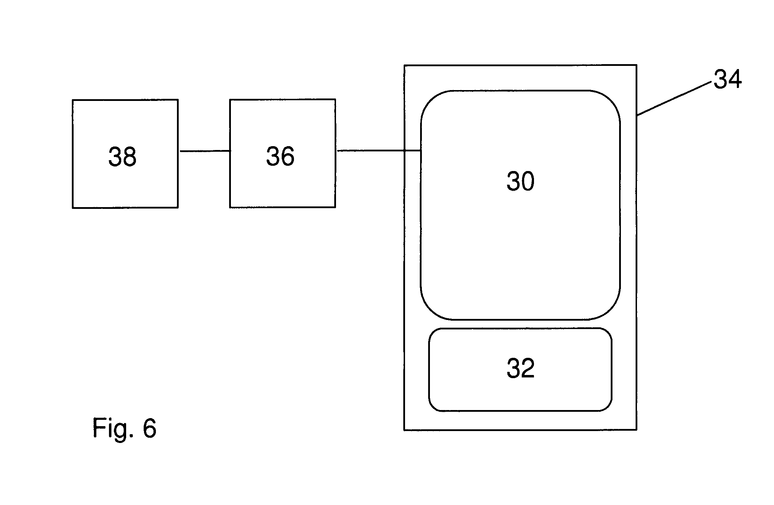

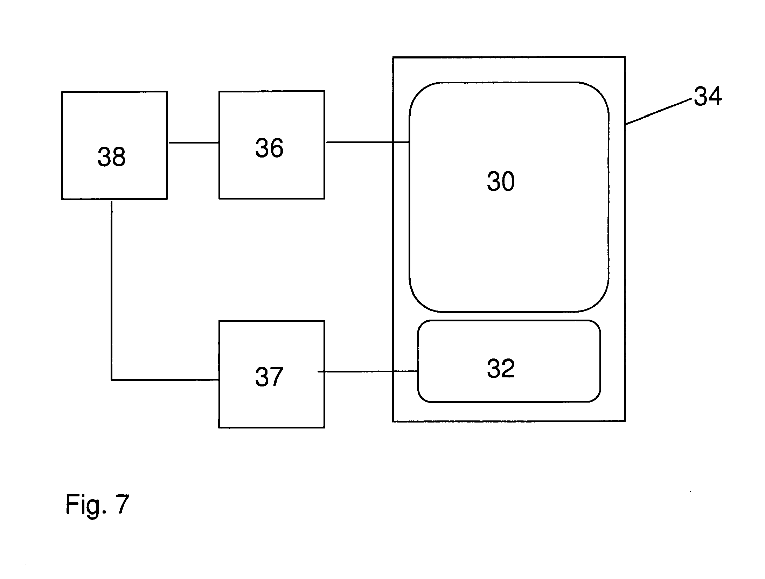

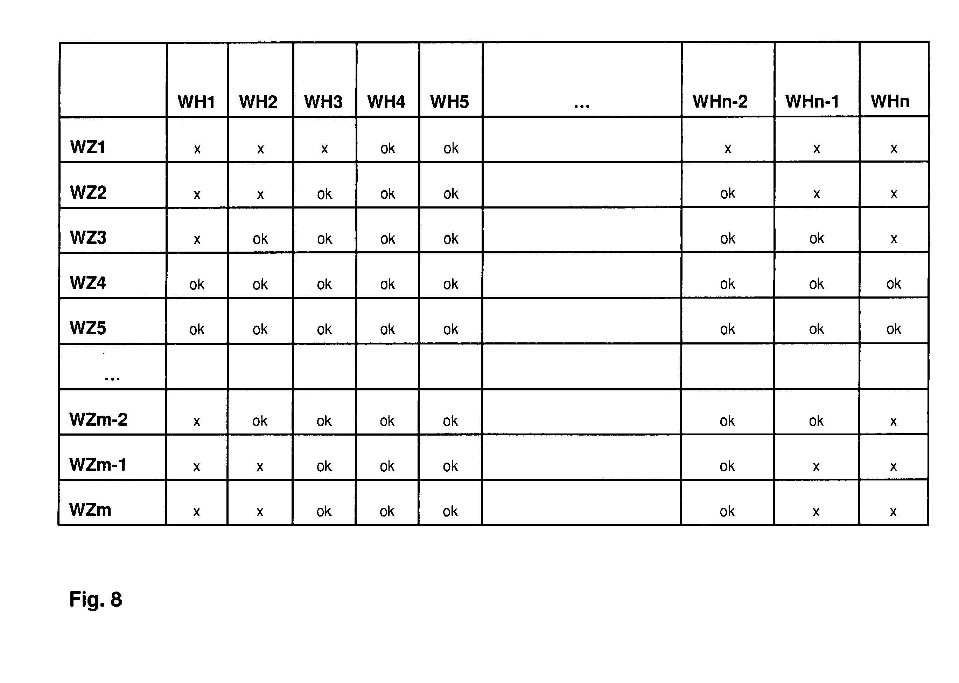

Fig. 5 zeigt eine perspektivische Darstellung einer alternativen lösbaren Verbindung zwischen Haupt- und Zusatzspiegelgehäuse 6, 7 des in den Figuren 1 und 3 gezeigten Spiegelkopfes mittels Formschluss. Fig. 5 zeigt Haupt- und Zusatzspiegelgehäuse 6, 7 offen, d. h. ohne eingesetzte Haupt- und Zusatzspiegelscheibe 1, 3. Das im wesentlichen wannenförmige Hauptspiegelgehäuse 6 weist an an der Grenzwand 20 zu dem Zusatzspiegelgehäuse 7 mehrere Befestigungsschlitze 22 auf. Das Zusatzspiegelgehäuse 7 weist an seiner der Grenzwand 20 des Hauptspiegelgehäuses 6 zugewandten Seite Befestigungselemente 24 auf, die mittels Formschluss in die Befestigungsschlitze 22 eingreifen. Die Befestigungselemente 24 sind T-förmige Elemente mit einem Halsteil 26 und einem Querteil 28. Die Dicke des Halsteils 26 der Befestigungselemente entspricht in etwa der Breite der Befestigungsschlitze 22, so dass das Halsteil 26 in die Befestigungsschlitze 22 eingeführt werden kann. Das Querteil 28 verhindert ein Abziehen des Zusatzspiegelgehäuses 7 in Längsrichtung des Halsteils 26. Die nach Montage des Zusatzspiegelgehäuses 7 an dem Hauptspiegelgehäuse 6 eingesetzte Hauptspiegelscheibe 1 verhindert ein Abziehen des Zusatzspiegelgehäuses 7 in Längsrichtung der Befestigungsschlitze 22.

### Bezugszeichenliste:

- 1: Hauptspiegelscheibe
- 2: Hauptspiegel
- 3: Zusatzspiegelscheibe
- 4: Zusatzspiegel
- 5: Schraubverbindung
- 6: Gehäuse Hauptspiegel
- 7: Gehäuse Zusatzspiegel
- 8: gemeinsame Verstelleinrichtung
- 10: Traktor
- 12: linker Außenspiegel
- 14: rechter Außenspiegel
- 16: Sichtfeld Hauptspiegel (aktuell)
- 16': Sichtfeld Hauptspiegel (Vergangenheit)
- 17: Überlappbereich
- 18: Sichtfeld Zusatzspiegel

- 20: Grenzwand
- 22: Befestigungsschlitze
- 24: Befestigungselemente
- 26: Halsteil von 24
- 28: Querteil von 24

## Patentansprüche

1. Spiegelkopf, mit
einem verstellbaren Hauptspiegel (2;), der eine Hauptspiegelscheibe (1) und ein Hauptspiegelgehäuse (6) umfasst,
wenigstens einem Zusatzspiegel (4), der eine Zusatzspiegelscheibe (3) und eine Zusatzspiegelgehäuse (7) umfasst,
wobei Haupt- und Zusatzspiegel unmittelbar neben- oder übereinander angeordnet sind, und wobei der Hauptspiegel (2) ein Hauptspiegelsichtfeld (16) und der Zusatzspiegel (4) ein Zusatzspiegelsichtfeld (18) aufweist, und
einer Spiegelverstelleinrichtung (8) zur Verstellung des Hauptspiegels, **dadurch gekennzeichnet,**
**dass** das Hauptspiegelgehäuse (6) und das Zusatzspiegelgehäuse (7) des wenigstens einen Zusatzspiegels (4;) derart starr miteinander verbunden sind, dass die Sichtfelder (16, 18) von Haupt- und Zusatzspiegel unmittelbar aneinander angrenzend sind oder in einem Teilbereich (17) überlappen, und
**dass** Haupt- und Zusatzspiegel (2, 4) lösbar miteinander verbunden sind.

2. Spiegelkopf nach Anspruch 1, **dadurch gekennzeichnet, dass** die Gehäuse (6, 7) von Haupt- und Zusatzspiegel (2, 4) miteinander verschraubt sind.

3. Spiegelkopf nach Anspruch 1 oder 2, **dadurch gekennzeichnet, dass** die Gehäuse (6, 7) von Haupt- (2) und Zusatzspiegel (4) über eine lösbare Formschlussverbindung (22, 24) miteinander verbunden sind.

4. Spiegelkopf nach einem der vorhergehenden Ansprüche, **dadurch gekennzeichnet, dass** die Gehäuse (6, 7) von Haupt- und Zusatzspiegel über eine lösbare Clips-Verbindung miteinander verbunden sind.

5. Spiegelkopf nach einem der vorhergehenden Ansprüche, **dadurch gekennzeichnet, dass** der Hauptspiegel (2; 30) und der wenigstens eine Zusatzspiegel (4; 32) unterschiedliche Wölbungsradien aufweisen.

6. Spiegelkopf nach einem der vorhergehenden Ansprüche, **dadurch gekennzeichnet, dass** der Hauptspiegel (2; 30) und/oder der wenigstens eine Zusatzspiegel (4; 32) ein asphärischer Spiegel ist.

7. Außenspiegel für Kraft- und Nutzfahrzeuge mit einem Spiegelkopf nach einem der vorhergehenden Ansprüche.

## Claims

1. A mirror head comprising
an adjustable main mirror (2;) comprising a main mirror pane (1) and a main mirror casing (6),
at least one supplementary mirror (4) comprising a supplementary mirror pane (3) and a supplementary mirror casing (7),
wherein the main mirror and the supplementary mirror are arranged to be immediately in juxtaposition or superimposed, and wherein the main mirror (2) presents a main mirror field of view (16) and the supplementary mirror (4) presents a supplementary mirror field of view (18),
and
a mirror adjusting means (8) adapted for adjusting the main mirror, **characterized**
**In that** the main mirror casing (6) and the supplementary mirror casing (7) of the at least one supplementary mirror (4;) are rigidly connected to each other such that the fields of view (16, 18) of the main mirror and of the supplementary mirror are directly adjacent to each other or are overlapped in a partial area (17), and
**in that** the main mirror and the supplementary mirror (2, 4) are detachably connected to each other.

2. The mirror head according to claim 1, **characterized in that** the casings (6, 7) of the main mirror and the supplementary mirror (2, 4) are screwed to each other.

3. The mirror head according to claim 1 or 2, **characterized in that** the casings (6, 7) of the main mirror (2) and the supplementary mirror (4) are connected to each other through a detachable positive connection (22, 24).

4. The mirror head according to any one of the preceding claims, **characterized in that** the casings (6, 7) of the main mirror and the supplementary mirror are connected to each other through a detachable clip-on connection.

5. The mirror head according to any one of the preceding claims, **characterized in that** the main mirror (2; 30) and the at least one supplementary mirror (4; 32) have different radii of convexity.

6. The mirror head according to any one of the preceding claims, **characterized in that** the main mirror (2; 30) and/or the at least one supplementary mirror (4; 32) is a non-spherical mirror.

7. An outside rear view mirror for automotive and utility vehicles comprising a mirror head according to any one of the preceding claims.

## Revendications

1. Tête de rétroviseur ou de miroir, comprenant un rétroviseur principal (2) réglable, qui englobe une glace de rétroviseur principal (1) et une coque de rétroviseur principal (6),
au moins un rétroviseur additionnel (4), qui englobe une glace de rétroviseur additionnel (3) et une coque de rétroviseur additionnel (7),
les rétroviseurs principal et additionnel étant agencés directement côte à côte ou directement les uns au-dessus des autres, et le rétroviseur principal (2) présentant un champ de vision de rétroviseur principal (16) et le rétroviseur additionnel (4) un champ de vision de rétroviseur additionnel (18),
et
un dispositif de réglage de rétroviseur (8) pour régler le rétroviseur principal,
**caractérisée**
**en ce que** la coque de rétroviseur principal (6) et la coque de rétroviseur additionnel (7) dudit au moins un rétroviseur additionnel (4), sont reliées mutuellement de manière rigide, de façon à ce que les champs de vision (16, 18) du rétroviseur principal et du rétroviseur additionnel soient directement adjacents ou se chevauchent sur une zone partielle (17), et
**en ce que** les rétroviseurs principal et additionnel (2, 4) sont reliés mutuellement de manière amovible.

2. Tête de rétroviseur selon la revendication 1, **caractérisée en ce que** les coques (6, 7) des rétroviseurs principal et additionnel (2, 4) sont reliées mutuellement par vissage.

3. Tête de rétroviseur selon la revendication 1 ou la revendication 2, **caractérisée en ce que** les coques (6, 7) des rétroviseurs principal (2) et additionnel (4) sont reliées mutuellement par l'intermédiaire d'une liaison par complémentarité de formes (22, 24), amovible.

4. Tête de rétroviseur selon l'une des revendications précédentes, **caractérisée en ce que** les coques (6, 7) des rétroviseurs principal et additionnel sont reliées mutuellement par l'intermédiaire d'une liaison par encliquetage, amovible.

5. Tête de rétroviseur selon l'une des revendications précédentes, **caractérisée en ce que** le rétroviseur principal (2 ; 30) et ledit au moins un rétroviseur additionnel (4 ; 32) présentent des rayons de courbure différents.

6. Tête de rétroviseur selon l'une des revendications précédentes, **caractérisée en ce que** le rétroviseur principal (2 ; 30) et/ou ledit au moins un rétroviseur additionnel (4 ; 32) est un rétroviseur asphérique.

7. Rétroviseur extérieur pour véhicule automobile et véhicules utilitaires comprenant une tête de rétroviseur selon l'une des revendications précédentes.
